(19) Europäisches Patentamt
European Patent Office
Office européen des brevets

(11) **EP 2 280 322 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(51) Int Cl.:
***G05B 13/04*** *(2006.01)*  ***G05B 17/02*** *(2006.01)*

(21) Anmeldenummer: **09164670.3**

(22) Anmeldetag: **06.07.2009**

(54) **Verfahren zur automatisierten Inbetriebnahme und/oder zum automatisierten Betrieb von Reglern eines elektrischen Antriebssystems mit schwingungsfähiger Mechanik sowie zugehörige Vorrichtung**

Method for automatic initiation and/or automatic operation of regulators of an electric drive system with oscillating mechanism and accompanying device

Procédé de mise en service et/ou de fonctionnement automatisés de régulateurs d'un système d'entraînement électrique doté d'un mécanisme pouvant osciller et dispositif correspondant

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**02.02.2011 Patentblatt 2011/05**

(73) Patentinhaber: **Baumüller Nürnberg GmbH 90482 Nürnberg (DE)**

(72) Erfinder: **Villwock, Sebastian 95701 Pechbrunn (DE)**

(74) Vertreter: **Götz, Georg Alois Intellectual Property IP-GÖTZ Patent- und Rechtsanwälte Am Literaturhaus, Königstrasse 70 90402 Nürnberg (DE)**

(56) Entgegenhaltungen:
**WO-A1-2009/055624    DE-A1- 10 046 005 DE-A1-102004 050 903**

- WERTZ H ET AL: "Self-tuning speed control for servo drives with imperfect mechanical load" INDUSTRY APPLICATIONS CONFERENCE, 2000. CONFERENCE RECORD OF THE 2000 IEEE 8-12 OCTOBER 2000, PISCATAWAY, NJ, USA,IEEE, Bd. 3, 8. Oktober 2000 (2000-10-08), Seiten 1497-1504, XP010521314 ISBN: 978-0-7803-6401-1

**Beschreibung**

Die Erfindung betrifft ein Verfahren zur automatisierten Inbetriebnahme von Reglern eines elektrischen Antriebssystems mit schwingungsfähiger Mechanik sowie eine zugehörige Vorrichtung.

Für die Inbetriebnahme bzw. den Betrieb von Reglern elektrischer Antriebssysteme sind die Werte der betriebsrelevanten Parameter zu bestimmen. In vielen praktischen Anwendungsfällen kann der mechanische Verband eines elektrischen Antriebs mit schwingungsfähiger Mechanik als Zweimassenschwinger modelliert werden. Dabei ist es zunächst erforderlich, das Antriebssystem als solches zu identifizieren, also ein Modell für das Antriebssystem zu bestimmen. Anschließend kann auf der Grundlage dieses identifizierten Modells die Parametrierung der Regler des Antriebssystems erfolgen.

Grundsätzlich gelingt die Reglerparametrierung umso besser, je zutreffender das Modell das reale System des Antriebssystems beschreibt. Die Reglerparametrierung hat im Allgemeinen einen unmittelbaren Einfluss auf die Prozessführung.

Bisher in der Literatur bekannte Ansätze gehen davon aus, dass für den zu regelnden Antriebsverband die Gesamthochlaufzeit bzw. das Massenträgheitsmoment bekannt sind. Insoweit wird eine A-priori-Kenntnis über das System vorausgesetzt. Die Gesamthochlaufzeit kann beispielsweise durch eine Schätzung ermittelt werden, wie sie in der Dissertation von Frank Schütte mit dem Titel "Automatisierte Reglerinbetriebnahme für elektrische Antriebe mit schwingungsfähiger Mechanik" der Universität Paderborn aus dem Jahr 2002 beschrieben ist.

Die dort beschriebene Vorgehensweise beruht auf der Annahme, dass das reale System im Bereich niedriger Frequenzen zwischen ca. 20 und 30 Hz das Verhalten eines Einmassensystems aufweist. Je weniger diese Voraussetzung jedoch tatsächlich erfüllt ist, desto ungenauer gelingt die Schätzung der Gesamthochlaufzeit und desto ungenauer wird somit die darauf basierende Optimierung der übrigen Systemparameter, für die die Schätzung der Gesamthochlaufzeit verwendet wird.

Ein weiteres Problem besteht darin, dass das reale System aufgrund von Reibungseffekten im Bereich sehr niedriger Frequenzen zwischen ca. 1 und 10 Hz kein rein integrales Verhalten aufweist, wie es in der Theorie vorausgesetzt wird. Hierdurch wird im Fall sehr elastischer Systeme mit einer Resonanzfrequenz in der Größenordnung von 30 Hz oder kleiner die Bestimmung der Gesamthochlaufzeit erschwert. Bei dem aus Wertz et. al, Self-tuning speed control for servo drives with imperfect mechanical load, Industry applications conference. Conference Record of the 2000 IEEE, IEEE Bd. 3. 1497 - 1504. 2000 bekannten Verfahren werden Eingangsparameter wie die Frequenz und die Amplitude geschätzt, um daraus Betriebsparameter zu ermitteln.

Der Erfindung liegt damit die Aufgabe zugrunde, ein diesbezüglich verbessertes Verfahren zur automatisierten Inbetriebnahme und/oder zum automatisierten Betrieb von Reglern eines elektrischen Antriebssystems mit schwingungsfähiger Mechanik anzugeben.

Zur Lösung dieser Aufgabe ist ein derartiges Verfahren vorgesehen, das die folgenden Schritte aufweist:

- Bestimmung eines vorläufigen Werts wenigstens eines Parameters,
- Bestimmung eines Modells des elektrischen Antriebssystems durch Bestimmung zunächst eines nichtparametrischen Modells durch Aufnahme von Frequenzgangsdaten bei Betrieb des Antriebssystems unter Verwendung des vorläufigen Werts wenigstens eines Parameters und anschließende Ermittlung von Parametern des elektrischen Antriebssystems anhand der Frequenzgangsdaten und unter Optimierung des wenigstens einen vorläufigen Werts wenigstens eines Parameters mittels eines numerischen Optimierungsverfahrens auf Basis des Levenberg-Marquardt-Algorithmus und
- Parametrierung der oder wenigstens eines Reglers des elektrischen Antriebssystems mittels wenigstens eines der ermittelten Parameter.

Die erfindungsgemäße Reglerinbetriebnahme gliedert sich somit nach der Schätzung des vorläufigen Werts eines Paramaters in zwei Schritte, wobei im ersten Schritt die Modellbildung des Antriebssystems stattfindet, während im zweiten Schritt die abschließende Reglerparametrierung durchgeführt wird. Die Modellbildung bzw. Systemidentifikation ihrerseits ist beim erfindungsgemäßen Verfahren wiederum zweistufig bzw. in zwei Schritte aufgegliedert. Dabei wird in der ersten Stufe ein nichtparametrisches Modell in Form des Frequenzgangs bestimmt. An die Durchführung der Frequenzgangsmessung schließt sich die Bestimmung der System- bzw. Modellparameter unter Verwendung der gemessenen Frequenzgangsdaten an. Für diese Parameterbestimmung wird das numerische Optimierungsverfahren von Levenberg und Marquardt verwendet.

Im Unterschied zu bisher bekannten Verfahren wird beim erfindungsgemäßen Verfahren die Optimierung in der zweiten Stufe der Modellbildung auch auf einen Parameterwert angewendet, der bereits, zum Beispiel anhand von vorab vorliegenden Frequenzgangsdaten bzw. eines gemessenen Amplitudengangs oder auch im Rahmen einer Berechnung, vorläufig bzw. mit einem Näherungswert bestimmt, insbesondere geschätzt, wurde. Es werden also im Rahmen der Erfindung beispielsweise die Gesamthochlaufzeit bzw. das Massenträgheitsmoment des mechanischen Antriebsverbands, die bei bisherigen Ansätzen geschätzt bzw. deren A-priori-Kenntnis in manchen Ansätzen auch einfach vorausgesetzt wurde, selbst einer Optimierung unterzogen, so dass das erfindungsgemäße Verfahren den Vorteil bietet, dass aus einer reinen Schätzung des entsprechenden Werts entstehende Fehler vermieden werden können bzw. dass keine (exakten) A-priori-Kenntnisse über das elektrische Antriebssystem vorhanden sein müssen. Wenigstens ein Parameter wird im Rahmen der Erfindung also zunächst geschätzt. Mit diesem Parameter kann die

Regelung derart vorläufig bzw. "grob" parametriert werden, dass der Antrieb betrieben werden kann. Dann erfolgt die Messung des Frequenzgangs, wofür der Antrieb wenigstens grundsätzlich lauffähig sein muss. An die Frequenzgangsmessung schließt sich die Parameteroptimierung bzw. das Parameterfitting an, wobei vorzugsweise alle Modellparameter, die das System beschreiben, auf Basis der gemessenen Frequenzgangsdaten bestimmt werden. Diese Optimierung schließt erfindungsgemäß auch den anfänglich vorläufig bzw. "grob" identifizierten Parameter ein. Im Ergebnis wird ein Modell des Antriebs mit allen identifizierten Systemparametern erhalten. Dieses dient dann im Zuge der Inbetriebnahme zur optimierten Reglerparametrierung.

Das Optimierungsverfahren liefert somit als Ergebnis nicht nur die übrigen Systemparameter, sondern auch einen optimierten Eingangsparameter, der bereits, zum Beispiel anhand von bereits vorliegenden Frequenzgangsdaten oder anhand theoretischer Überlegungen oder Vergleichsdaten, in einer ersten Näherung ermittelt werden konnte, aber dann anschließend im Rahmen der Durchführung des Optimierungsalgorithmus weiter optimiert wird, so dass Fehler bei der Schätzung, die gegebenenfalls einen großen negativen Einfluss auf die Reglerparametrierung haben können, weitgehend vermieden werden.

Mit der Erfindung ist es also möglich, die Genauigkeit und Zuverlässigkeit bei der Modellierung von Antriebssträngen zu verbessern. Eine A-priori-Kenntnis über den zu modellierenden bzw. zu parametrisierenden Antriebsverband ist nicht mehr erforderlich. Mit der verbesserten automatisierten Modellierung der Antriebsstränge gelingt auch die anschließende automatisierte Reglerparametrierung besser. Dies führt im Endeffekt zu einer Verbesserung des Regelverhaltens und kann damit schließlich zu einer Verbesserung der jeweiligen Applikation führen, denn im Hinblick auf die Applikation besteht die Hauptanforderung in der Regel darin, eine möglichst hohe Bandbreite des geregelten Systems zu erzielen, wobei auf ausreichende Robustheit bezüglich sich im Betrieb ändernde Parameter der Regelstrecke geachtet werden muss.

Die Erfindung ermöglicht es, den konträren Anforderungen einer hochdynamischen Drehzahlregelung bei im Wesentlichen kurzer Anregelzeit und geringer Überschwingbreite einerseits und der Anforderungen der Robustheit gegenüber nicht modellierten Streckeneigenschaften und nicht exakt identifizierten Parametern andererseits Rechnung zu tragen. In diesem Bereich darf durch eine ungenaue Modellierung des realen Systems keine Regeldynamik verschenkt werden, was im Rahmen der vorliegenden Erfindung Beachtung findet.

Dabei ist die Erfindung besonders dann hilfreich, wenn schwankende Prozessparameter auftreten, so dass eine robuste Identifikationsroutine eingesetzt werden muss, die unter Umständen auch während des laufenden Betriebs der Anlage Verwendung finden bzw. zur erneuten Identifikation eingesetzt werden kann und deshalb ohne A-priori-Kenntnisse über die Regelstrecke auskommen muss. Denn während des laufenden Betriebs und in ähnlichen Fällen ist es nicht möglich, vorab einen Hochlaufversuch oder andere vergleichbare Versuche durchzuführen. Ein typischer Fall hierfür ist gegeben, wenn eine Modellfolgeregelung zu realisieren ist. Bei einer solchen Regelstrategie wird ein ständiger Vergleich zwischen einem berechneten Modell der Regelstrecke und dem realen System durchgeführt.

Eine im Fall sehr elastischer Systeme zwangsläufig fehlerhafte Schätzung des Gesamtträgheitsmoments des Verbunds aus eingangs ermittelten Frequenzgangsdaten kann also im Rahmen der Erfindung durch den nachfolgenden Optimierungsprozess korrigiert werden. Damit entfällt die Notwendigkeit ergänzender zusätzlicher Versuche, insbesondere von Hochlaufversuchen.

Erfindungsgemäß kann als Modell des elektrischen Antriebssystems ein Zweimassenschwingermodell verwendet werden und/oder das Modell des elektrischen Antriebssystems kann ohne eine A-priori-Kenntnis des elektrischen Antriebssystems bestimmt werden. Die Modellierung des mechanischen Verbands eines Antriebs als Zweimassenschwinger ist bei vielen praktischen Anwendungsfällen sinnvoll. Beim erfindungsgemäßen Verfahren besteht der Vorteil, dass keine Vorkenntnisse des elektrischen Antriebssystems zu seiner Durchführung erforderlich sind. Das Verfahren wird also mit besonderem Vorteil so durchgeführt, dass neben dem durch den Levenberg-Marquardt-Algorithmus weiter optimierten Parameter, für den anhand der ersten Frequenzgangsdaten oder eine andere erste Abschätzung ein vorläufiger Schätzwert bestimmt wird, der also nicht vorab exakt bekannt ist, auch keine weiteren Parameter des Systems bekannt sein müssen, so dass alle Systemparameter letztlich aus dem Optimierungsverfahren hervorgehen. Zusätzliche Versuche zur Parameterbestimmung können somit entfallen.

Insbesondere ist es sinnvoll, wenn beim vorliegenden Verfahren als vorläufiger Wert eines Parameters eine Gesamthochlaufzeit des elektrischen Antriebssystems, insbesondere aus Frequenzgangsdaten im Bereich kleiner Frequenzen, geschätzt und als Startwert für das numerische Optimierungsverfahren auf Basis des Levenberg-Marquardt-Algorithmus verwendet wird.

Die Gesamthochlaufzeit ist ein Wert, der bei bisherigen Ansätzen A-priori bestimmt bzw. nach bestimmten Verfahren abgeschätzt wird, ohne dass der Schätzwert selber nochmals geprüft würde. Bei der Erfindung hingegen kann ein vorläufiger Wert der Gesamthochlaufzeit, die sich aus der Summe der Hochlaufzeit des Motors und der Hochlaufzeit der Last zusammensetzt, selbst als zu optimierender Wert in den Optimierungsalgorithmus eingebracht und im Rahmen des Algorithmus weiter verbessert werden, um so letztlich einen optimalen, realitätsnahen Wert für die Gesamthochlaufzeit zu erhalten und Fehler bei der Bestimmung, die einen gravierenden Einfluss auf das Prozessverhalten des Systems haben können, zu vermeiden.

Erfindungsgemäß kann ein vorläufiger Wert der Gesamthochlaufzeit anhand des Quotienten der Anzahl der Messwerte einer Teilsignalfolge und der Summe der Beträge einer allgemeinen Übertragungsfunktion in Abhängigkeit von Kreisfrequenzen von 1 bis zur Anzahl der Messwerte geschätzt werden, zu dem die Gesamthochlaufzeit proportional ist.

Die Schätzung des Massenträgheitsmoments des gesamten mechanischen Antriebsverbands, das multipliziert mit der mechanischen Nennwinkelgeschwindigkeit $\Omega_N$ und dividiert durch das Nenndrehmoment $M_N$ die Gesamthochlaufzeit ergibt, erfolgt also demgemäß entsprechend der in der eingangs erwähnten Dissertation von Schütte angegebenen Gleichung

$$\hat{J}_{ges} = \frac{L}{\sum_{i=1}^{L} |G_{mech}(j\omega_i)|},$$

wobei L die Anzahl der Messwerte der Teilsignalfolge ist und $G_{mech}(j\omega_i)$ für die allgemeine Übertragungsfunktion steht.

Die allgemeine Übertragungsfunktion eines elastischen Zweimassensystems ist definiert als

$$G_{mech}(s) = \frac{\omega_M(s)}{m_M(s)} = \frac{1}{s \cdot (T_M + T_L)} \cdot \frac{T_L \cdot T_C \cdot s^2 + d \cdot T_C \cdot s + 1}{\frac{T_L \cdot T_C \cdot T_M}{T_M + T_L} \cdot s^2 + d \cdot T_C \cdot s + 1},$$

wobei $\omega_M(s)$ die Motorwinkelgeschwindigkeit ist, während $m_M(s)$ das Antriebsmoment darstellt. s ist ein komplexer Parameter, $T_M$, $T_L$, $T_C$ und d sind die zu identifizierenden Systemparameter. $T_M$ bezeichnet die Hochlaufzeit des Motors, $T_L$ die Hochlaufzeit der Last, $T_C$ eine normierte Federkonstante und d die normierte Materialdämpfung der Feder.

Wäre nun die Gesamthochlauf des Systems, also

$$T_{ges} = T_M + T_{L,}$$

des mechanischen Antriebsverband A-priori bekannt bzw. wäre das zugehörige Massenträgheitsmoment $J_{ges}$ bekannt, so könnte wegen

$$T_{ges} = J_{ges} \cdot \Omega_N / M_N$$

eine reduzierte Übertragungsfunktion definiert werden, wobei $\Omega_N$ die mechanische Nennwinkelgeschwindigkeit und $M_N$ das Nenndrehmoment ist. Diese reduzierte Übertragungsfunktion würde sich dann zu

$$G_{res}(s) = G_{mech}(s) \cdot s \cdot T_{ges} = \frac{T_L \cdot T_C \cdot s^2 + d \cdot T_C \cdot s + 1}{\frac{T_L \cdot T_C \cdot T_M}{T_M + T_L} \cdot s^2 + d \cdot T_C \cdot s + 1} \approx \frac{a_3 \cdot s^2 + a_3 \cdot s + 1}{a_1 \cdot s^3 + a_2 \cdot s + 1}$$

ergeben, wobei $a_1$, $a_2$ und $a_3$ Koeffizienten sind, die zu einem Parametervektor a̅ zusammengesetzt werden können. $T_M$ wird im Koeffizienten $a_1$ durch den Zusammenhang $T_M = T_{ges} - T_L$ substituiert.

Voraussetzung für die genannte Substitution ist jedoch, dass die Gesamthochlaufzeit entweder von vornherein bekannt ist oder aus einer separaten Messung wie einem Hochlaufversuch ermittelt wird.

Die erwähnte Schätzung der Gesamthochlaufzeit aus einem gemessenen Amplitudengang im Bereich kleiner Frequenzen geht von der Voraussetzung aus, dass das reale System im Bereich niedriger Frequenzen bis etwa 30 Hz das Verhalten eines Einmassensystems aufweist. Ist diese Voraussetzung nicht erfüllt, so wird die Schätzung der Gesamthochlaufzeit umso ungenauer, je größer die Abweichung vom Verhalten eines Einmassensystems ist. Damit erfolgt auch die Optimierung der übrigen Systemparameter, in die die Schätzung der Gesamthochlaufzeit eingeht, entsprechend ungenauer. Hinzu kommt das Problem, dass das reale System durch Reibungseffekte im Bereich niedriger Frequenzen von einem bis etwa 10 Hz kein rein integrales Verhalten aufweist, wie es in der Theorie vorausgesetzt wird.

Erfindungsgemäß können im Rahmen des numerischen Optimierungsverfahrens auf Basis des Levenberg-Marquardt-Algorithmus als Parameter ein Parametervektor aus drei Koeffizienten einer reduzierten Übertragungsfunktion eines elastischen Zweimassenschwingermodells und/oder eine Gesamthochlaufzeit des elektrischen Antriebssystems bestimmt werden.

Vorteilhafterweise erfolgt bei der Optimierung die Bestimmung der drei Parameter $a_1$, $a_2$ und $a_3$ sowie der Gesamthochlaufzeit $T_{ges}$ gemeinsam. Es werden also einerseits die zu einem Parametervektor a̅ zusammenfassbaren Systemparameter optimiert und andererseits findet implizit eine weitere Optimierung der Gesamthochlaufzeit, die zunächst geschätzt worden ist bzw. die (durch Schätzung oder anderswie) vorläufig bestimmt worden ist, statt. Durch die zusätzliche weitere Optimierung der Hochlaufzeit bzw. eines anderen geeigneten Parameters, wirken sich Fehler, die bei der Vorgabe des Startwerts dieses Parameters vorhanden waren, also beispielsweise Fehler bei der Schätzung eines solchen Parameters, nicht nachteilig auf die weitere Parameterbestimmung aus, da der vorläufige Parameterwert gemeinsam mit den übrigen Systemparametern optimiert wird. Somit ist letztlich eine wesentlich bessere Bestimmung der Prozessparameter möglich.

Zur Bestimmung des Parametervektors aus den drei Koeffizienten der reduzierten Übertragungsfunktion eines elastischen Zweimassenschwingermodells und der Gesamthochlaufzeit des elektrischen Antriebssystems kann das numerische Optimierungsverfahren auf Basis des Levenberg-Marquardt-Algorithmus von der reduzierten Übertragungsfunktion auf die allgemeine Übertragungsfunktion des elastischen Zweimassenschwingermodells erweitert werden.

Die Gesamthochlaufzeit wird wie beschrieben im Sinne einer Startwerterzeugung für den iterativen Levenberg-Marquardt-Algorithmus geschätzt, dann aber im Rahmen des Optimierungsprozesses mittels des Levenberg-Marquardt-Verfahrens identifiziert, um so ein im ganzen robusteres Verfahren zur parametrischen Modellierung von Zweimassenschwingern zu erhalten, das keine A-priori-Kenntnisse über den Parameter Gesamthochlaufzeit verlangt. Dabei ist zu beachten, dass die Optimierung der Gesamthochlaufzeit nicht losgelöst von der bisherigen Optimierung der Parameter $a_1$, $a_2$ und $a_3$ ergänzt werden kann. Um so das erfindungsgemäß verbesserte Reglerverhalten und damit den technischen Vorteil der Erfindung zu nutzen, ist es erforderlich, dass die mathematischen Gleichungen für das Optimierungsverfahren von der reduzierten Übertragungsfunktion $G_{nrs}$ auf die allgemeine Übertragungsfunktion $G_{mech}$ erweitert werden. Der Index "nrs" der reduzierten Übertragungsfunktion steht dabei für "non rigid system", also für die Beschreibung des schwingungsfähigen Teils der Mechanik.

Im Rahmen des numerischen Optimierungsverfahrens auf Basis des Levenberg-Marquardt-Algorithmus kann eine Fehlerfunktion ausgewertet werden, die auf der Differenz des im Rahmen der Aufnahme von Frequenzgangsdaten gemessenen Frequenzgangs und der im Rahmen der Modellbestimmung gewonnenen, von den drei Koeffizienten der reduzierten Übertragungsfunktion eines elastischen Zweimassenschwingermodells und der Gesamthochlaufzeit des elektrischen Antriebssystems abhängenden Modellfunktion basiert.

Demgemäß werden zweckmäßigerweise die die Ableitungen der Fehlerfunktion nach den ermittelten Parametern des elektrischen Antriebssystems in Form der drei Koeffizienten der reduzierten Übertragungsfunktion und der Gesamthochlaufzeit des elektrischen Antriebssystems enthaltende modifizierte Hessematrix und der Gradientenvektor, die zur Berechnung eines Korrekturvektors eines jeweiligen Iterationsschritts des Levenberg-Marquardt-Algorithmus verwendet werden, auf vierdimensionale Zusammenhänge erweitert. Der Korrekturvektor des jeweiligen Iterationsschritts ergibt sich dabei aus der Multiplikation der inversen modifizierten Hessematrix mit dem Gradientenvektor.

Die auszuwertende Fehlerfunktion lautet somit

$$\chi^2(\bar{a}) = \sum_{i=1}^{N} \left| G_{Mess,i}(j\omega_i) - G_{Modell,i}(j\omega_i, \bar{a}, T_{ges}) \right|^2$$

bzw.

$$\chi^2(\vec{a}) = \sum_{i=1}^{N} \left| G_{Mess,i}(j\omega_i) - \frac{1}{T_{ges}} \cdot \frac{-2a_2\omega^2 + (a_2a_3 - a_1)\omega^4 + j\left[\omega + \omega^3(1 - a_3 - a_2^2) - a_1\omega^5\right]}{(a_2\omega^2)^2 + (\omega^3 + \omega)^2} \right|^2$$

Dabei steht $G_{Mess,i}(j\omega_i)$ für den gemessenen Frequenzgang. Die modellierte Funktion wird durch $G_{Modell,i}(j\omega_i, \vec{a}, T_{ges})$ dargestellt. Die Funktionen sind hier nicht mehr in Abhängigkeit des komplexen Parameters s angegeben, sondern in Abhängigkeit der imaginären Kreisfrequenz $j\omega_i$.

Wie erwähnt werden ebenso die modifizierte Hessematrix $\underline{A}_{mod}$ sowie der Gradientenvektor $\vec{\beta}$, die die Ableitungen der Fehlerfunktion nach den berücksichtigten Systemparametern enthalten, auf vierdimensionale Zusammenhänge erweitert. Aus der modifizierten Hessematrix und dem Gradientenvektor wird dann ein Korrekturvektor $\vec{\delta}$ gemäß

$$\vec{\delta} = \underline{A}_{mod}^{-1} \vec{\beta}$$

bestimmt. Die vierdimensionalen Zusammenhänge für die modifizierte Hessematrix und den Gradientenvektor lauten

$$\underline{A}_{mod} = \underline{A} + \underline{A}\lambda\underline{I} = \begin{pmatrix} \dfrac{\partial^2\chi^2(\vec{a},T_{ges})}{\partial a_1\,\partial a_1}(1+\lambda) & \dfrac{\partial^2\chi^2(\vec{a},T_{ges})}{\partial a_1\,\partial a_2} & \dfrac{\partial^2\chi^2(\vec{a},T_{ges})}{\partial a_1\,\partial a_3} & \dfrac{\partial^2\chi^2(\vec{a},T_{ges})}{\partial a_1\,\partial T_{ges}} \\[2mm] \dfrac{\partial^2\chi^2(\vec{a},T_{ges})}{\partial a_2\,\partial a_1} & \dfrac{\partial^2\chi^2(\vec{a},T_{ges})}{\partial a_2\,\partial a_2}(1+\lambda) & \dfrac{\partial^2\chi^2(\vec{a},T_{ges})}{\partial a_2\,\partial a_3} & \dfrac{\partial^2\chi^2(\vec{a},T_{ges})}{\partial a_2\,\partial T_{ges}} \\[2mm] \dfrac{\partial^2\chi^2(\vec{a},T_{ges})}{\partial a_3\,\partial a_1} & \dfrac{\partial^2\chi^2(\vec{a},T_{ges})}{\partial a_3\,\partial a_2} & \dfrac{\partial^2\chi^2(\vec{a},T_{ges})}{\partial a_3\,\partial a_3}(1+\lambda) & \dfrac{\partial^2\chi^2(\vec{a},T_{ges})}{\partial a_3\,\partial T_{ges}} \\[2mm] \dfrac{\partial^2\chi^2(\vec{a},T_{ges})}{\partial T_{ges}\,\partial a_1} & \dfrac{\partial^2\chi^2(\vec{a},T_{ges})}{\partial T_{ges}\,\partial a_2} & \dfrac{\partial^2\chi^2(\vec{a},T_{ges})}{\partial T_{ges}\,\partial a_3} & \dfrac{\partial^2\chi^2(\vec{a},T_{ges})}{\partial T_{ges}\,\partial T_{ges}}(1+\lambda) \end{pmatrix}$$

bzw.

$$\vec{\beta} = -\frac{1}{2}\cdot \mathrm{grad}\left(\chi^2(\vec{a},T_{ges})\right) = \begin{pmatrix} \dfrac{\partial\chi^2(\vec{a},T_{ges})}{\partial a_1} \\[2mm] \dfrac{\partial\chi^2(\vec{a},T_{ges})}{\partial a_2} \\[2mm] \dfrac{\partial\chi^2(\vec{a},T_{ges})}{\partial a_3} \\[2mm] \dfrac{\partial\chi^2(\vec{a},T_{ges})}{\partial T_{ges}} \end{pmatrix}$$

Als allgemeine Übertragungsfunktion kann im Rahmen des Verfahrens der Quotient der Motorwinkelgeschwindigkeit und des Antriebsmoments und/oder als reduzierte Übertragungsfunktion das Produkt der allgemeinen Übertragungsfunktion mit einem komplexen Faktor und der Gesamthochlaufzeit des elektrischen Antriebssystems verwendet werden.

Zur Optimierung aller Systemparameter im Rahmen des Optimierungsverfahrens unter Verwendung des Levenberg-Marqüardt-Algorithmus kommt dabei zweckmäßigerweise die auf die entsprechende Gesamtzahl der Systemparameter erweiterte allgemeine Übertragungsfunktion zum Einsatz. In dieser tritt mit der Summe der Hochlaufzeit des Motors und der Hochlaufzeit der Last die Hochlaufzeit des Gesamtsystems auf. Bei der reduzierten Übertragungsfunktion wurde unter der Voraussetzung, dass die Gesamthochlaufzeit bekannt ist, bei bisherigen Ansätzen oft eine Substitution der Hochlaufzeit der Masse im ersten Koeffizienten des Parametervektors vorgenommen.

Dabei kann eine Übertragungsfunktion verwendet werden, die von der Hochlaufzeit des Motors, der Hochlaufzeit der Last, der normierten Federkonstante und der normierten Federdämpfung des elektrischen Antriebssystems abhängt, und/oder es kann als Parameter ein Parametervektor aus den drei Koeffizienten a) Produkt aus der Hochlaufzeit des Motors und der Last mit der normierten Federkonstante dividiert durch die Summe der Hochlaufzeit des Motors und der Last, $(T_L * T_C * T_M)/(T_M + T_L)$, b) Produkt der normierten Federdämpfung und der normierten Federkonstante, $d * T_C$, sowie c) Produkt der Hochlaufzeit der Last und der normierten Federkonstante, $T_L * T_C$, verwendet werden. Dieser Vektor kann als Parametervektor ä geschrieben werden.

die Ermittlung von Parametern des elektrischen Antriebssystems anhand der Frequenzgangsdaten und unter Optimierung wenigstens eines vorläufigen Werts wenigstens eines Parameters mittels eines numerischen Optimierungsverfahrens auf Basis des Levenberg-Marquardt-Algorithmus kann während des laufenden Betriebs des elektrischen Antriebssystems durchgeführt werden, insbesondere derart, dass alle Parameter des elektrischen Antriebssystems bzw. Antriebsstrangs ermittelt und/oder optimiert werden, einschließlich des wenigstens einen vorläufigen, vorzugsweise anfänglich geschätzten, Parameterwerts. Eine erneute Schätzung oder dergleichen des wenigstens eines vorläufigen Werts wenigstens eines Parameters ist nicht erforderlich, da dieser erfindungsgemäß während des Anlagenbetriebs optimiert werden kann. Damit bietet sich die Anwendung der Erfindung zum Beispiel im Fall schwankender Parameterwerte und/oder im Rahmen einer Modellfolgeregelung an.

Erfindungsgemäß muss also beispielsweise im Fall schwankender Prozessparameter aufgrund der Robustheit des erfindungsgemäßen Verfahrens kein erneuter Hochlaufversuch oder dergleichen durchgeführt werden, um eine zuverlässige Identifikation der Modellparameter (erneut) durchzuführen. Es ist also auch während des laufenden Betriebs eine Anlage ohne A-priori-Kenntnisse über die Regelstrecke eine Modellbestimmung möglich. Dies ist beispielsweise für eine Modellfolgeregelung wichtig, bei der ein ständiger Vergleich zwischen einem berechneten Modell der Regelstrecke und dem realen System durchgeführt wird.

Erfindungsgemäß wird die Ordnung des Systemmodells im Vergleich zu den bisherigen Ansätzen um eins erweitert, so dass der im Antriebssystem zu implementierende Quellcode von einem Quellcode für ein dreidimensionales auf einen Quellcode für ein vierdimensionales Problem zu erweitern ist. Hierfür ist ein wie beschrieben neu abgeleiteter und zu implementierender Algorithmus vorgesehen.

Des Weiteren betrifft die Erfindung eine Vorrichtung zur automatisierten Inbetriebnahme und/oder zum automatisierten Betrieb von Reglern eines elektrischen Antriebssystems mit schwingungsfähiger Mechanik, insbesondere gemäß einem Verfahren wie vorstehend beschrieben, mit Mitteln, die zur Bestimmung eines vorläufigen Werts wenigstens eines Parameters, zur Bestimmung eines Modells des elektrischen Antriebssystems durch Bestimmung zunächst eines nichtparametrischen Modells durch Aufnahme von Frequenzgangsdaten bei Betrieb des elektrischen Antriebssystems unter Verwendung des vorläufigen Werts wenigstens eines Parameters und zur anschließenden Ermittlung von Parametern des elektrischen Antriebssystems anhand der Frequenzgangsdaten und unter Optimierung des wenigstens einen vorläufigen Werts wenigstens eines Parameters mittels eines numerischen Optimierungsverfahrens auf Basis des Levenberg-Marquardt-Algorithmus und zur Parametrierung der oder wenigstens eines Reglers des elektrischen Antriebssystems mittels wenigstens eines der ermittelten Parameter ausgebildet sind.

Die Vorrichtung zur automatischen Inbetriebnahme und/oder zum Betrieb der Regler bzw. das elektrische Antriebssystem mit der Vorrichtung oder eine entsprechende Anlage weisen also geeignete Steuerungs- und/oder Regelungsmittel auf, mit deren Hilfe, beispielsweise unter Verwendung einer Recheneinrichtung oder dergleichen, eine Modellbestimmung für das elektrische Antriebssystem möglich ist bzw. mit denen eine Ansteuerung der Regler mit den über das Modell ermittelten Parametern und/oder eine Weiterleitung der Parameter an die Regler erfolgen kann. Gegebenenfalls können auch die Regler selbst Mittel zur Bestimmung der Parameterwerte aufweisen, indem sie beispielsweise mit eigenen Prozessoren bzw. Recheneinrichtungen ausgestattet sind. Die Modellbestimmung und/oder Parametrierung kann also je nach Ausgestaltung der Regler reglerextern und/oder reglerintern erfolgen.

Weitere Vorteile, Merkmale und Einzelheiten der Erfindung ergeben sich anhand des folgenden Ausführungsbeispiels sowie aus den Zeichnungen. Dabei zeigen:

Figur 1    eine Übersichtsskizze zur Durchführung eines erfindungsgemäßen Verfahrens,

Figur 2    eine Darstellung des Amplitudengangs eines Zweimassenschwingers und eine entsprechende Approximation als Einmassensystem gemäß dem Stand der Technik,

Figur 3    gemessene Frequenzgangsdaten eines mechanischen Verbands und eine zugehörige Kohärenzfunktion und

Figur 4      den Frequenzgang eines Zweimassenprüfstands und eine zugehörige Modellfunktion gemäß dem Stand der Technik.

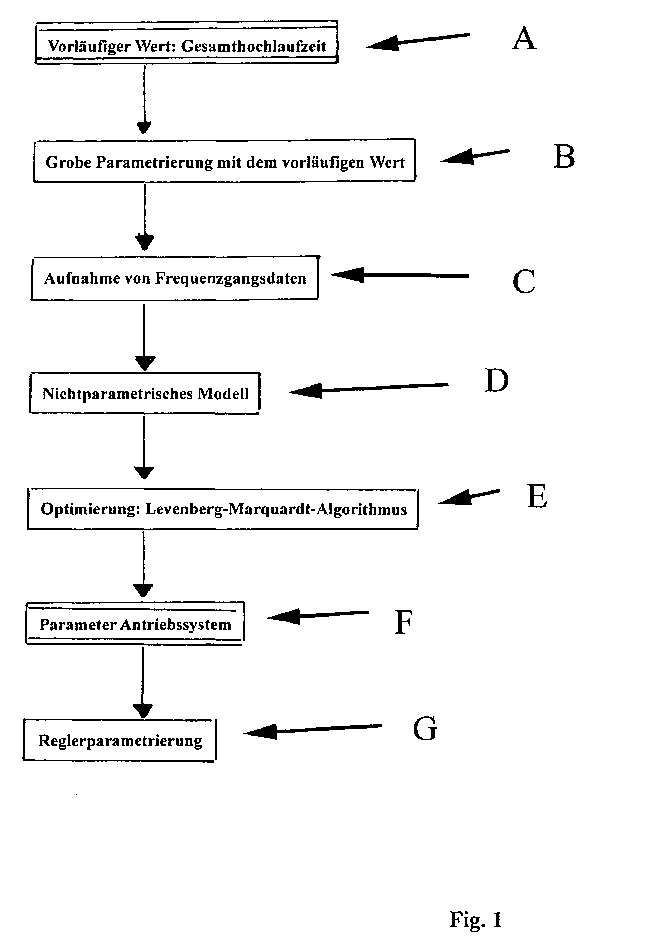

In der Figur 1 ist eine Übersichtsskizze zur Durchführung eines erfindungsgemäßen Verfahrens gezeigt.

Dabei erfolgt im Rahmen der automatisierten Inbetriebnahme von Reglern des elektrischen Antriebssystems mit schwingungsfähiger Mechanik gemäß dem Kästchen A zunächst eine Bestimmung eines vorläufigen Werts der Gesamthochlaufzeit. Diese Schätzung kann beispielsweise auf den Daten eines Amplitudengangs beruhen. Der vorläufige Wert der Gesamthochlaufzeit dient gemäß dem Kästchen B zur groben ersten Parametrierung der Regelung, um zunächst grundsätzlich einen Betrieb des Antriebs durchführen zu können. Damit kann, vgl. Kästchen C, die Aufnahme von Frequenzgangsdaten erfolgen, da für diese Messung Voraussetzung ist, dass der Antrieb zumindest grundsätzlich lauffähig ist. Die Frequenzgangsdaten dienen, wie im Kästchen D angedeutet, als nichtparametrisches Modell des Antriebssystems.

An die Frequenzgangsmessung schließt sich die Parameteroptimierung gemäß Kästchen E an. Hierbei werden alle Modellparameter des Systems auf Basis der gemessenen Frequenzgangsdaten optimiert, auch der vorläufige Wert der Gesamthochlaufzeit. Der Optimierungsalgorithmus ist erfindungsgemäß ein Levenberg-Marquardt-Algorithmus, bei dessen Ablauf der vorläufig geschätzte Parameterwert als Startwert verwendet wird. Der Optimierungsalgorithmus wird also so ausgeführt, dass der vorläufige Wert der Gesamthochlaufzeit neben den übrigen Systemparametern, also in aller Regel einem Parametervektor ä mit den drei Komponenten $a_1$, $a_2$ und $a_3$, (weiter) optimiert wird.

Damit ergeben sich im Ergebnis insgesamt vier optimierte Parameterwerte des Antriebssystems (vgl. Kästchen F), nämlich eine optimierte Gesamthochlaufzeit und ein optimierter Parametervektor a mit den drei genannten Vektorkomponenten.

Diese optimierten Parameter des elektrischen Antriebssystems werden dann gemäß dem Kästchen G für die Reglerparametrierung verwendet. Dabei bietet das erfindungsgemäße Verfahren den Vorteil, dass die Gesamthochlaufzeit aus dem Kästchen A lediglich einen Startwert darstellt, der im späteren Verfahrensverlauf weiter optimiert wird, so dass auch während eines laufenden Anlagenbetriebs, beispielsweise bei schwankenden Parameterwerten, eine erneute Bestimmung optimierter Parameter vorgenommen werden kann, da nicht eigens ein A-priori-Wert für die Hochlaufzeit bestimmt werden muss bzw. eine Gesamthochlaufzeit aus einem Hochlaufversuch ermittelt werden muss, sondern einmal geschätzte Werte gemäß den aktuellen Begebenheiten zusammen mit den übrigen Systemparametern weiter optimiert werden können.

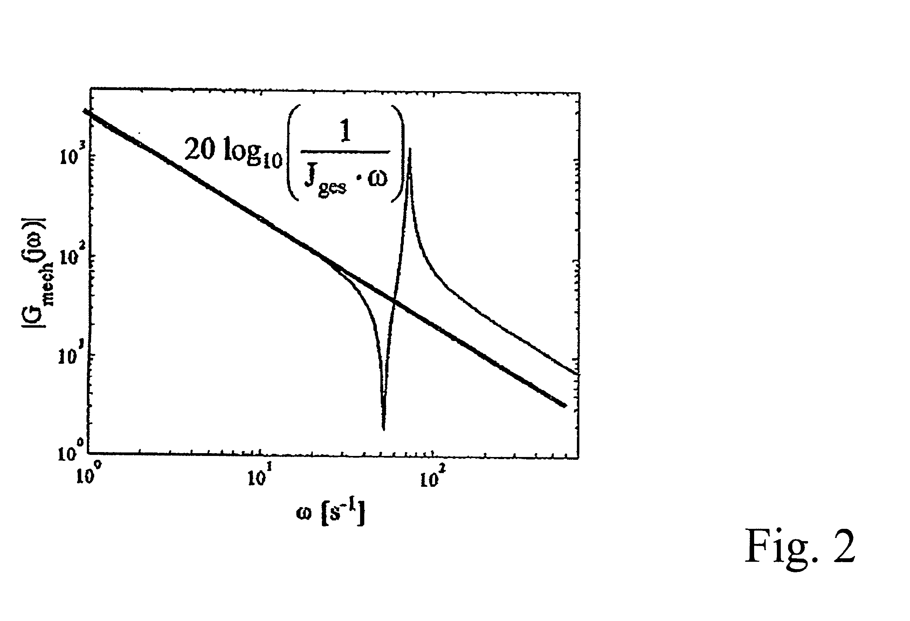

Die Figur 2 zeigt eine Darstellung des Amplitudengangs eines Zweimassenschwingers und eine entsprechende Approximation als Einmassensystem gemäß dem Stand der Technik. Auf der Abszisse ist dabei die Kreisfrequenz aufgetragen, auf der Ordinate der Betrag der allgemeinen Übertragungsfunktion. Die Approximation, die erfindungsgemäß für die Startwertbestimmung für den Levenberg-Marquardt-Algorithmus verwendet werden kann, ist insofern fehlerbehaftet, als die Voraussetzung für die Schätzung ist, dass das reale System im niedrigen Frequenzbereich zwischen 20 und 30 Hz das Verhalten eines Einmassensystems aufweisen muss, wobei die Schätzung umso ungenauer wird, desto weniger diese Voraussetzung erfüllt ist. Da beim erfindungsgemäßen Verfahren zur Reglerinbetriebnahme jedoch nicht nur eine Optimierung der übrigen Systemparameter, sondern auch des geschätzten Startwerts stattfindet, gelingt die Parameterbestimmung insgesamt wesentlich besser als bei herkömmlichen Verfahren.

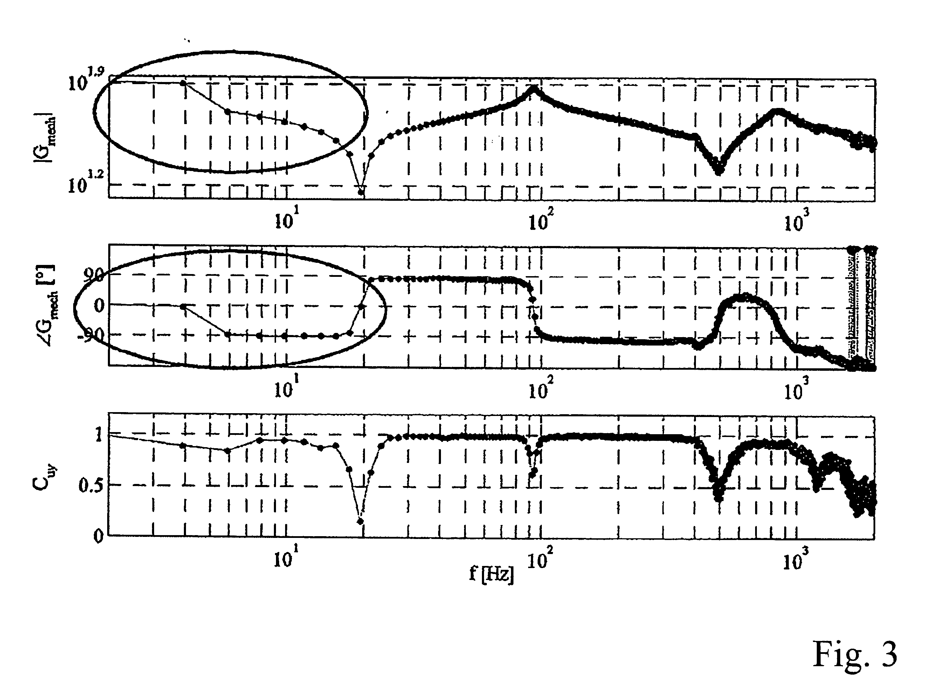

Die Figur 3 zeigt gemessene Frequenzgangsdaten eines mechanischen Verbands und eine zugehörige Kohärenzfunktion, wobei hier auf der Abszisse die Frequenz in Hz aufgetragen ist, auf den Ordinaten die Federkonstante $C_{uy}$, sowie die allgemeine Übertragungsfunktion (in Grad) bzw. der Betrag der allgemeinen Übertragungsfunktion.

Das reale System weist infolge von Reibungseffekten im sehr niedrigen Frequenzbereich von etwa 1 bis 10 Hz kein integrales Verhalten auf, wie es die Theorie verlangt. Dies erschwert im Falle sehr elastischer Systeme mit einer Resonanzfrequenz $f_{res}$ in der Größenordnung von 30 Hz oder kleiner die Bestimmung der Gesamthochlaufzeit. Der Frequenzgang in der Figur 3 zeigt, dass das System bis zur ersten Tilgerfrequenz nicht das Verhalten eines Einmassensystems aufweist, bei dem der Amplitudengang die charakteristische Steigung von -20dB/Dekade aufweisen muss. Oberhalb der Tilgerfrequenz ist eine Approximation des Antriebsstrangs als Einmassensystem nicht mehr möglich.

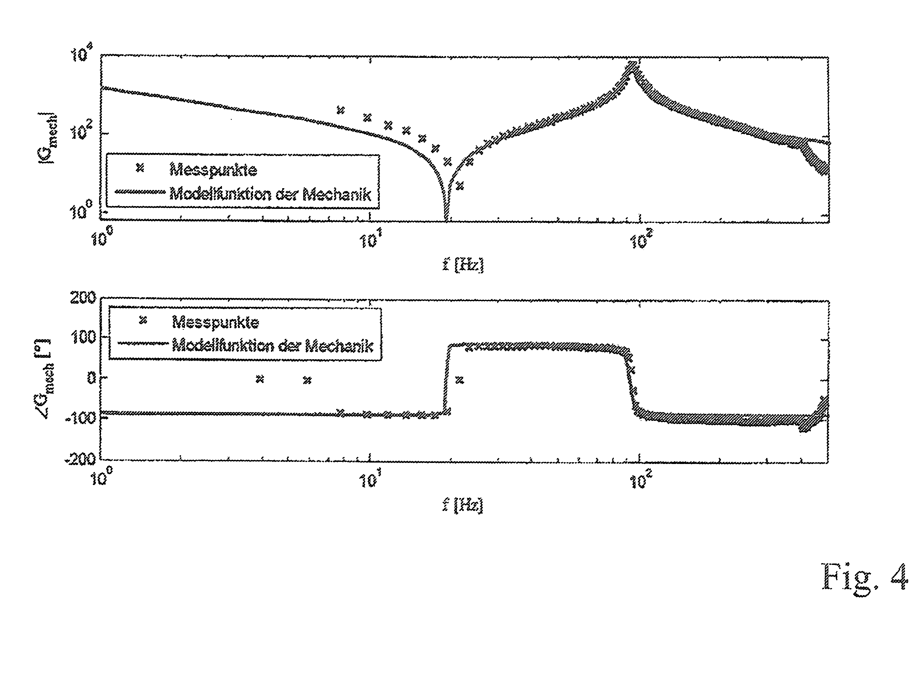

In der Figur 4 ist der Frequenzgang eines Zweimassenprüfstands mit einer zugehörigen Modellfunktion gemäß dem Stand der Technik gezeigt. Auf der Abszisse ist die Frequenz f in Hz aufgetragen, auf der Ordinate entsprechend die allgemeine Übertragungsfunktion in Grad bzw. der Betrag der allgemeinen Übertragungsfunktion. Die Modellfunktion, die mit Ansätzen gemäß dem Stand der Technik bestimmt wurde, weist zwar oberhalb der Tilgerfrequenz eine recht gute Übereinstimmung mit dem gemessenen Frequenzgang auf, unterhalb der Tilgungsfrequenz sind jedoch Abweichungen zu erkennen. Dabei gilt die Regel, dass, je elastischer der mechanische Verband ist, umso stärker die Schätzung des Gesamtträgheitsmodells die Modellierung beeinträchtigen wird. Durch die erfindungsgemäße Optimierung der Gesamthochlaufzeit zusammen mit den übrigen Systemparametern können derartige Probleme insbesondere bei elastischen Verbänden vermieden oder deutlich reduziert werden. Dadurch entsteht ein im Ganzen robusteres Verfahren zur parametrischen Modellierung von Zweimassenschwingern, ohne dass A-priori-Kenntnisse über die Gesamthochlaufzeit oder weitere Parameter erforderlich wären.

**Bezugszeichenliste**

**A - G**   Kästchen Verfahrensablauf

**Patentansprüche**

1.   Verfahren zur automatisierten Inbetriebnahme von Reglern eines elektrischen Antriebssystems mit schwingungsfähiger Mechanik mit den folgenden Schritten:

- Bestimmung eines vorläufigen Werts wenigstens eines Parameters,
- Bestimmung eines Modells des elektrischen Antriebssystems durch Bestimmung zunächst eines nichtparametrischen Modells durch Aufnahme von Frequenzgangsdaten bei Betrieb des elektrischen Antriebssystems
unter Verwendung des vorläufigen Werts wenigstens eines Parameters und anschließende Ermittlung von
Parametern des elektrischen Antriebssystems anhand der Frequenzgangsdaten und unter Optimierung des
wenigstens einen vorläufigen Werts wenigstens eines Parameters mittels eines numerischen Optimierungsverfahrens auf Basis des Levenberg-Marquardt-Algorithmus und
- Parametrierung der oder wenigstens eines Reglers des elektrischen Antriebssystems mittels wenigstens eines
der ermittelten Parameter.

2.   Verfahren nach Anspruch 1, **dadurch gekennzeichnet, dass** als Modell des elektrischen Antriebssystems ein
Zweimassenschwingermodell verwendet wird und/oder dass das Modell des elektrischen Antriebssystems ohne
eine A-priori-Kenntnis des elektrischen Antriebssystems bestimmt wird.

3.   Verfahren nach einem der vorangehenden Ansprüche, **dadurch gekennzeichnet, dass** als vorläufiger Wert eines
Parameters eine Gesamthochlaufzeit des elektrischen Antriebssystems, insbesondere aus Frequenzgangsdaten
im Bereich kleiner Frequenzen, geschätzt und als Startwert für das numerische Optimierungsverfahren auf Basis
des Levenberg-Marquardt-Algorithmus verwendet wird.

4.   Verfahren nach Anspruch 3, **dadurch gekennzeichnet, dass** ein vorläufiger Wert der Gesamthochlaufzeit anhand
des Quotienten der Anzahl der Messwerte einer Teilsignalfolge und der Summe der Beträge einer allgemeinen
Übertragungsfunktion in Abhängigkeit von Kreisfrequenzen von 1 bis zur Anzahl der Messwerte geschätzt wird, zu
dem die Gesamthochlaufzeit proportional ist.

5.   Verfahren nach einem der vorangehenden Ansprüche, **dadurch gekennzeichnet, dass** im Rahmen des numerischen Optimierungsverfahrens auf Basis des Levenberg-Marquardt-Algorithmus als Parameter ein Parametervektor
aus drei Koeffizienten einer reduzierten Übertragungsfunktion eines elastischen Zweimassenschwingermodells und/
oder eine Gesamthochlaufzeit des elektrischen Antriebssystems bestimmt werden.

6.   Verfahren nach Anspruch 5, **dadurch gekennzeichnet, dass** zur Bestimmung des Parametervektors aus den drei
Koeffizienten der reduzierten Übertragungsfunktion eines elastischen Zweimassenschwingermodells und der Gesamthochlaufzeit des elektrischen Antriebssystems das numerische Optimierungsverfahren auf Basis des Levenberg-Marquardt-Algorithmus von der reduzierten Übertragungsfunktion auf die allgemeine Übertragungsfunktion
des elastischen Zweimassenschwingermodells erweitert wird.

7.   Verfahren nach Anspruch 6, **dadurch gekennzeichnet, dass** im Rahmen des numerischen Optimierungsverfahren
auf Basis des Levenberg-Marquardt-Algorithmus eine Fehlerfunktion ausgewertet wird, die auf der Differenz des
im Rahmen der Aufnahme von Frequenzgangsdaten gemessenen Frequenzgangs und der im Rahmen der Modellbestimmung gewonnenen, von den drei Koeffizienten der reduzierten Übertragungsfunktion eines elastischen Zweimassenschwingermodells und der Gesamthochlaufzeit des elektrischen Antriebssystems abhängenden Modellfunktion basiert.

8.   Verfahren nach Anspruch 7, **dadurch gekennzeichnet, dass** die die Ableitungen der Fehlerfunktion nach den
ermittelten Parametern des elektrischen Antriebssystems in Form der drei Koeffizienten der reduzierten Übertragungsfunktion und der Gesamthochlaufzeit des elektrischen Antriebssystems enthaltende modifizierte Hessematrix
und der Gradientenvektor, die zur Berechnung eines Korrekturvektors eines jeweiligen Iterationsschritts des Levenberg-Marquardt-Algorithmus verwendet werden, auf vierdimensionale Zusammenhänge erweitert werden.

9. Verfahren nach einem der vorangehenden Ansprüche, **dadurch gekennzeichnet, dass** als allgemeine Übertragungsfunktion im Rahmen des Verfahrens der Quotient der Motorwinkelgeschwindigkeit und des Antriebsmoments und/oder als reduzierte Übertragungsfunktion das Produkt der allgemeinen Übertragungsfunktion mit einem komplexen Parameter und der Gesamthochlaufzeit des elektrischen Antriebssystems verwendet wird.

10. Verfahren nach einem der vorangehenden Ansprüche, **dadurch gekennzeichnet, dass** eine Übertragungsfunktion verwendet wird, die von der Hochlaufzeit des Motors, der Hochlaufzeit der Last, der normierten Federkonstante und der normierten Federdämpfung des elektrischen Antriebssystems abhängt, und/oder dass als Parameter ein Parametervektor aus den drei Koeffizienten a) Produkt aus der Hochlaufzeit des Motors und der Last mit der normierten Federkonstante dividiert durch die Summe der Hochlaufzeit des Motors und der Last, b) Produkt der normierten Federdämpfung und der normierten Federkonstante sowie c) Produkt der Hochlaufzeit der Last und der normierten Federkonstante verwendet wird.

11. Verfahren nach einem der vorangehenden Ansprüche, **dadurch gekennzeichnet, dass** die Ermittlung von Parametern des elektrischen Antriebssystems anhand der Frequenzgangsdaten und unter Optimierung wenigstens eines vorläufigen Werts wenigstens eines Parameters mittels eines numerischen Optimierungsverfahrens auf Basis des Levenberg-Marquardt-Algorithmus während des laufenden Betriebs des elektrischen Antriebssystems durchgeführt wird, insbesondere derart, dass alle Parameter des elektrischen Antriebssystems ermittelt und/oder optimiert werden, einschließlich des wenigstens einen vorläufigen, vorzugsweise anfänglich geschätzten, Parameterwerts.

12. Vorrichtung zur automatisierten Inbetriebnahme von Reglern eines elektrischen Antriebssystems mit schwingungsfähiger Mechanik, insbesondere gemäß einem Verfahren nach einem der vorangehenden Ansprüche, mit Mitteln, ausgebildet zur Bestimmung eines vorläufigen Werts wenigstens eines Parameters, zur Bestimmung eines Modells des elektrischen Antriebssystems durch Bestimmung zunächst eines nichtparametrischen Modells durch Aufnahme von Frequenzgangsdaten bei Betrieb des elektrischen Antriebssystems unter Verwendung des vorläufigen Werts wenigstens eines Parameters und zur anschließenden Ermittlung von Parametern des elektrischen Antriebssystems anhand der Frequenzgangsdaten und unter Optimierung des wenigstens einen vorläufigen Werts wenigstens eines Parameters mittels eines numerischen Optimierungsverfahrens auf Basis des Levenberg-Marquardt-Algorithmus und zur Parametrierung der oder wenigstens eines Reglers des elektrischen Antriebssystems mittels wenigstens eines der ermittelten Parameter.

## Claims

1. Method for the automated startup of controllers of an electrical drive system with vibrational mechanics with the following steps:

   - Determination of a preliminary value of at least one parameter,
   - Determination of a model of the electrical drive system by means of the determination of initially a non-parameterized model through the recording of frequency response data during operation of the drive system subject to the utilization of the preliminary value of at least one parameter and the subsequent determination of parameters of the electrical drive system based on the frequency response data and subject to the optimization of at least one preliminary value of at least one parameter by means of a numerical optimization method on the basis of the Levenberg-Marquardt algorithm and
   - Parameterization of the plurality of or at least one controller of the electrical drive system by means of at least one of the determined parameters.

2. Method according to claim 1, **characterized in that** a two-mass oscillating system is used as a model of the electrical drive system and/or that the model of the electrical drive system is determined without an a-priori knowledge of the electrical drive system.

3. Method according to any one of the preceding claims, **characterized in that** as preliminary value of a parameter a total startup time of the electrical drive system is estimated, in particular from frequency response data in the range of small frequencies, and is used as a starting value for the numerical optimization method on the basis of the Levenberg-Marquardt algorithm

**4.** Method according claim 3, **characterized in that** a preliminary value of the total startup time is estimated based on the quotient of the number of measured values of a partial signal sequence and the sum of the absolute values of a general transfer function depending on angular frequencies from 1 to the number of measured values, to which the total startup time is proportional.

**5.** Method according to any one of the preceding claims, **characterized in that** in the context of the numerical optimization method on the basis of the Levenberg-Marquardt algorithm, a parameter vector of three coefficients of a reduced transfer function of an elastic two-mass oscillator model and/or a total startup time of the electrical drive system is determined as a parameter.

**6.** Method according to claim 5, **characterized in that** for the determination of the parameter vector of the three coefficients of the reduced transfer function of an elastic two-mass oscillator model and the total startup time of the electrical drive system the numerical optimization method on the basis of the Levenberg-Marquardt algorithm is expanded from the reduced transfer function to the general transfer function of the elastic two-mass oscillator model.

**7.** Method according to claim 6, **characterized in that** in the context of the numerical optimization method on the basis of the Levenberg-Marquardt algorithm an error function is evaluated that is based on the difference between the frequency response that was measured in the context of the recording of the frequency response data and the model function that was determined in the context of the model determination and which depends on the three coefficients of the reduced transfer function of an elastic two-mass oscillator model and the total startup time of the electrical drive system.

**8.** Method according to claim 7, **characterized in that** the modified Hesse matrix that contains the derivative of the error function with respect to the determined parameters of the electrical drive system in the form of the three coefficients of the reduced transfer function and the total startup time of the electrical drive system and the gradient vector, which are utilized for the calculation of a correction vector of a respective iteration step of the Levenberg-Marquardt algorithm, are expanded to four-dimensional relations.

**9.** Method according to any one of the preceding claims, **characterized in that** as a general transfer function in the context of the method the quotient of the angular velocity of the motor and the drive torque and/or as reduced transfer function the product of the general transfer function with a complex parameter and the total startup time of the electrical drive system is utilized.

**10.** Method according to any one of the preceding claims, **characterized in that** a transfer function is utilized that depends on the startup time of the motor, the startup time of the load, the normalized spring constant and the normalized spring damping of the electrical drive system, and/or that as a parameter a parameter vector is utilized that consists of the three coefficients a) product of the startup time of the motor and the load with the normalized spring constant divided by the sum of the startup time of the motor and the load, b) product of the normalized spring damping and the normalized spring constant as well as c) product of the startup time of the load and the normalized spring constant.

**11.** Method according to any one of the preceding claims, **characterized in that** the determination of parameters of the electrical drive system based on the frequency response data and subject to optimization of at least one preliminary value of at least one parameter by means of a numerical optimization method on the basis of the Levenberg-Marquardt algorithm is implemented during the running operation of the electrical drive system, in particular in such a manner that all parameters of the electrical drive system are determined and/or optimized, including the at least one preliminary, preferably initially estimated, parameter value.

**12.** Device for the automated startup of controllers of an electrical drive system with vibrational mechanics, in particular according to a method according to any one of the preceding claims, with means that are implemented for the determination of a preliminary value of at least one parameter, for the determination of a model of the electrical drive system by means of a determination of an initially non-parametric model by means of recording of frequency response data during operation of the electrical drive system subject to the utilization of the preliminary value of at least one parameter and for the subsequent determination of parameters of the electrical drive system based on the frequency response data and subject to the optimization of at least one preliminary value of at least one parameter by means of a numerical optimization method on the basis of the Levenberg-Marquardt algorithm and for the parameterization of the plurality of or at least one controller of the electric drive system by means of at least one of the determined parameters.

**Revendications**

1. Procédé de mise en service automatisée de régulateurs d'un système d'entraînement électrique doté d'un mécanisme oscillant, comprenant les étapes suivantes :

   - détermination d'une valeur provisoire d'au moins un paramètre,
   - détermination d'un modèle du système d'entraînement électrique par détermination, dans un premier temps, d'un modèle non-paramétrique par l'enregistrement de données de réponse en fréquence lors du fonctionnement du système d'entraînement électrique en utilisant la valeur provisoire d'au moins un paramètre, et par détermination subséquente de paramètres du système d'entraînement électrique à l'aide des données de réponse en fréquence et par optimisation de ladite au moins une valeur provisoire d'au moins un paramètre au moyen d'un processus d'optimisation numérique sur la base de l'algorithme de Levenberg-Maquardt, et
   - paramétrage des ou d'au moins un régulateur du système d'entraînement électrique au moyen d'au moins l'un des paramètres déterminés.

2. Procédé selon la revendication 1, **caractérisé en ce qu'**on utilise comme modèle du système d'entraînement électrique un modèle d'oscillateur à double masse et/ou **en ce que** le modèle du système d'entraînement électrique est défini sans une connaissance 'a priori' du système d'entraînement électrique.

3. Procédé selon l'une des revendications précédentes, **caractérisé en ce qu'**est estimé en tant que valeur provisoire d'un paramètre, en particulier à partir de données de réponse en fréquence dans la plage de basses fréquences, un temps total de montée en régime du système d'entraînement électrique, lequel est utilisé comme valeur initiale pour le processus d'optimisation numérique sur la base de l'algorithme de Levenberg-Maquardt.

4. Procédé selon la revendication 3, **caractérisé en ce qu'**une valeur provisoire du temps total de montée en régime est estimée à l'aide du quotient du nombre de valeurs mesurées d'une séquence partielle de signaux et de la somme des valeurs d'une fonction de transfert générale en fonction de pulsations de 1 jusqu'au nombre de valeurs mesurées, auquel est proportionnel le temps total de montée en régime.

5. Procédé selon l'une des revendications précédentes, **caractérisé en ce que** sont définis comme paramètres, dans le cadre du processus d'optimisation numérique sur la base de l'algorithme de Levenberg-Maquardt, un vecteur de paramètres à partir de trois coefficients d'une fonction de transfert réduite d'un modèle d'oscillateur élastique à double masse et/ou un temps total de montée en régime du système d'entraînement électrique.

6. Procédé selon la revendication 5, **caractérisé en ce que**, pour la détermination du vecteur de paramètres à partir des trois coefficients de la fonction de transfert réduite d'un modèle d'oscillateur élastique à double masse et du temps total de montée en régime du système d'entraînement électrique, le processus d'optimisation numérique sur la base de l'algorithme de Levenberg-Maquardt est étendu de la fonction de transfert réduite à la fonction de transfert générale du modèle d'oscillateur élastique à double masse.

7. Procédé selon la revendication 6, **caractérisé en ce qu'**est évaluée, dans le cadre du processus d'optimisation numérique sur la base de l'algorithme de Levenberg-Maquardt, une fonction d'erreur basée sur la différence entre la réponse en fréquence mesurée dans le cadre de l'enregistrement de données de réponse en fréquence et la fonction de modèle acquise dans le cadre de la détermination du modèle et dépendante des trois coefficients de la fonction de transfert réduite d'un modèle d'oscillateur élastique à double masse et du temps total de montée en régime du système d'entraînement électrique.

8. Procédé selon la revendication 7, **caractérisé en ce que** la matrice hessienne modifiée contenant les dérivées de la fonction d'erreur selon les paramètres déterminés du système d'entraînement électrique sous la forme des trois coefficients de la fonction de transfert réduite et du temps total de montée en régime du système d'entraînement électrique, et le vecteur de gradients, qui sont utilisés pour calculer un vecteur de correction d'une étape itérative respective de l'algorithme de Levenberg-Maquardt, sont étendus à des relations quadridimensionnelles.

9. Procédé selon l'une des revendications précédentes, **caractérisé en ce qu'**on utilise comme fonction de transfert générale dans le cadre du procédé le quotient de la vitesse angulaire moteur et du couple d'entraînement et/ou comme fonction de transfert réduite le produit de la fonction de transfert générale avec un paramètre complexe et le temps total de montée en régime du système d'entraînement électrique.

**EP 2 280 322 B1**

10. Procédé selon l'une des revendications précédentes, **caractérisé en ce qu'**on utilise une fonction de transfert qui est fonction du temps de montée en régime du moteur, du temps de montée en régime de la charge, de la constante de rappel normalisée et de l'amortissement à ressorts normalisé du système d'entraînement électrique, et/ou **en ce qu'**on utilise comme paramètre un vecteur de paramètres résultant des trois coefficients a) Produit du temps de montée en régime du moteur et de la charge et de la constante de rappel normalisée, divisé par la somme du temps de montée en régime du moteur et de la charge, b) Produit de l'amortissement à ressorts normalisé et de la constante de rappel normalisée, ainsi que c) Produit du temps de montée en régime de la charge et de la constante de rappel normalisée.

11. Procédé selon l'une des revendications précédentes, **caractérisé en ce que** la détermination de paramètres du système d'entraînement électrique à l'aide des données de réponse en fréquence et par l'optimisation d'au moins une valeur provisoire d'au moins un paramètre au moyen d'un processus d'optimisation numérique sur la base de l'algorithme de Levenberg-Maquardt est réalisée au cours du fonctionnement du système d'entraînement électrique, en particulier de manière telle que tous les paramètres du système d'entraînement électrique soient déterminés et/ou optimisés, y compris ladite au moins une valeur de paramètre provisoire, de préférence initialement estimée.

12. Dispositif de mise en service automatisée de régulateurs d'un système d'entraînement électrique doté d'un mécanisme oscillant, en particulier selon un procédé selon l'une des revendications précédentes, comprenant des moyens conçus pour déterminer une valeur provisoire d'au moins un paramètre, déterminer un modèle du système d'entraînement électrique par détermination, dans un premier temps, d'un modèle non-paramétrique par l'enregistrement de données de réponse en fréquence lors du fonctionnement du système d'entraînement électrique en utilisant la valeur provisoire d'au moins un paramètre, et par détermination subséquente de paramètres du système d'entraînement électrique à l'aide des données de réponse en fréquence et par optimisation de ladite au moins une valeur provisoire d'au moins un paramètre au moyen d'un processus d'optimisation numérique sur la base de l'algorithme de Levenberg-Maquardt, et pour le paramétrage des régulateurs ou d'au moins un régulateur du système d'entraînement électrique au moyen d'au moins l'un des paramètres déterminés.

13

Fig. 1

EP 2 280 322 B1

Fig. 2

Fig. 3

EP 2 280 322 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *Automatisierte Reglerinbetriebnahme für elektrische Antriebe mit schwingungsfähiger Mechanik,* 2002

- **WERTZ.** Self-tuning speed control for servo drives with imperfect mechanical load, Industry applications conference. *Conference Record of the 2000 IEEE,* 2000, vol. 3, 1497-1504